# EUROPEAN PATENT SPECIFICATION

(11) **EP 3 671 005 B1**
(45) Date of publication and mention of the grant of the patent: **18.10.2023**
(21) Application number: 19218892.8
(22) Date of filing: 20.12.2019
(51) Int. Cl.: F16P 3/12, H01H 1/00, H01H 3/14, B04C 1/00, B27M 1/00, B02C 23/04, B27L 11/00

(54) **CONTACT-SENSITIVE ELECTRICAL SAFETY DEVICE HAVING AN IMPROVED SENSITIVE ELEMENT**
KONTAKT-EMPFINDLICHES ELEKTRISCHES SICHERHEITSGERÄT MIT EINEM VERBESSERTEN EMPFINDLICHEN ELEMENT
DISPOSITIF DE SÉCURITÉ ÉLECTRIQUE SENSIBLE AU CONTACT AYANT UN ÉLÉMENT SENSIBLE AMÉLIORÉ

(30) Priority: 20.12.2018 IT 201800020308
(43) Date of publication of application: 24.06.2020
(73) Proprietor: BIESSE S.p.A., 61122 Pesaro (PU) (IT)
(72) Inventor: D'ETTORRE, Massimo, 60019 SENIGALLIA (AN) (IT); CANTORO, Eliseo, 61122 PESARO (PU) (IT); MARCHETTI, Giorgio, 47826 VERUCCHIO (RN) (IT)
(74) Representative: Studio Torta S.p.A.

(56) References cited:
- WO-A1-99/09570
- DE-A1- 19 829 019
- GB-A- 2 261 115
- US-A- 5 667 152

## Description

### CROSS-REFERENCE TO RELATED APPLICATIONS

This patent application claims priority from Italian patent application no. 102018000020308 filed on 20/12/2018.

### TECHNICAL FIELD

The present invention relates to a contact-sensitive electrical safety device having an improved sensitive element.

### BACKGROUND ART

As is known, contact-sensitive electrical devices are widely used as electrical safety devices, for example in the industrial field, to interrupt or limit the operation of electrical machinery or devices in unsafe conditions for operators, in order to safeguard the safety of the same operators.

In several areas of application, use of these electrical safety devices is specifically required by safety regulations.

Electrical safety devices include, for example, sensitive platforms or carpets, sensitive bumpers, sensitive edges or sides; in general, the operation of these electrical safety devices provides that, in the event of contact or collision with an operator (or when an operator is standing above them), the pressure exerted on the devices switches the operating state of an electrical contact, so as to allow a safety electrical interruption of the coupled electronic machinery or apparatus to be promptly activated.

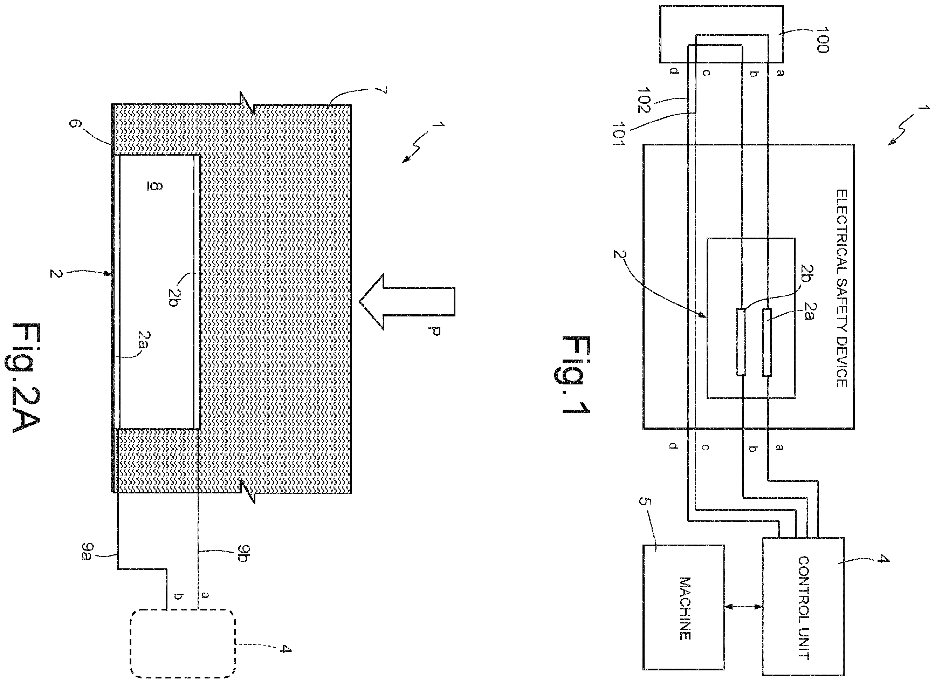

As schematically illustrated in Figure 1, an electrical safety device, generally denoted by 1, comprises a sensitive element 2 consisting of a first contact element 2a and a second contact element 2b electrically connected to a control unit 4, which is external to the electrical safety device 1 and coupled to a machinery or apparatus 5 (the control unit 4 can be integrated into the machinery or apparatus 5 or arranged externally thereto).

In the event of a contact or collision interaction with an operator, the sensitive element 2 switches its operating state, in particular, the first contact element 2a, which is normally electrically separated from the second contact element 2b, electrically contacts the same second contact element 2b. The control unit 4 detects switching of the operating state of the sensitive element 2 and, in response to this switching, promptly interrupts or limits the operation of the coupled machinery or apparatus 5, so as to guarantee safety of the operator.

The control unit 4 can be a controller dedicated to monitoring of the operating state of the electrical safety device 1, or it can be the controller (of the PLC - Programmable Logic Controller - type) of the same machinery or apparatus 5.

In the illustrated embodiment, each of the first and second contact elements 2a, 2b is part of a respective electrical circuit comprising the control unit 4 and a termination connector element 100.

In particular, the first and second contact elements 2a, 2b are connected to a first and, respectively, to a second terminal (indicated by 'a' and 'b'), of the control unit 4 and of the termination connector element 100, interposed along a first and a second circuit branch; the aforementioned first circuit branch is part of a first electrical circuit which closes through a first return line 101 connected to a third terminal (indicated by 'c') of the control unit 4 and of the termination connector element 100, and similarly, the aforementioned second circuit branch is part of a second electrical circuit which closes through a second return line 102 connected to a fourth terminal (indicated by 'd') of the control unit 4 and of the termination connector element 100. Therefore, within the same termination connector element 100, the first terminal 'a' is connected to the third terminal 'c' and the second terminal 'b' is connected to the fourth terminal 'd'.

The control unit 4 is configured to detect the correct connections and the electrical continuity of the first and second electrical circuits; for this purpose, the control unit 4 supplies terminal 'a' with a first control signal (for example, a so-called "triggered", pulsed or square-wave voltage signal), which must be detected as identical on terminal 'c' under correct operating conditions; and similarly it supplies the terminal 'b' with a second control signal (for example, again, a pulsed voltage signal) with different characteristics (for example in terms of frequency, duty cycle and/or amplitude) compared to the first control signal, which must be detected as identical on terminal 'd' under correct operating conditions.

If the control unit 4 does not detect the expected signal on terminal 'c' or on terminal 'd', it sets the machine 5 into an alarm state, as it detects a connection failure or a defect in the electrical safety device 1, in particular in its sensitive element 2. In particular, if the first and second contact elements 2a, 2b of the sensitive element 2 come into contact with each other, due to compression following contact interaction with the operator, the control unit 4 detects on terminals 'c' and 'd' a signal different from the first and second control signals individually provided on terminals 'a' and 'b' (in particular, a pulse signal resulting from the "combination" of the first and the second control signals), so that the same control unit 4 can detect switching of the operating state of the electrical safety device 1 and set the machine 5 into the alarm state and/or interrupt or limit its operation.

In currently marketed electrical safety devices of a known type, the first and second contact elements 2a, 2b consist of a respective sheet or plate made of a conductive material, for example aluminium or copper, which are normally arranged at an appropriate separation distance and electrically connected to respective terminals.

Figure 2A shows a first embodiment of a known type of electrical safety device 1, in this case of the bumper type.

This safety device 1 comprises a base structure 6; and a covering structure 7, for example made of polyurethane foam or other material, for example an elastomeric material, soft to the touch, optionally covered with a suitable material interfacing the external environment.

The covering structure 7 is coupled above the base structure 6 and internally defines a hollow chamber 8 having a bottom wall defined by the same base structure 6.

The conductive sheet of the first contact element 2a, for example made of aluminium, is coupled, for example by gluing, to the base structure 6, at the bottom wall of the chamber 8; the respective conductive sheet of the second contact element 2b, for example also made of aluminium, is coupled to a top wall of the same chamber 8, so as to face the conductive sheet of the first contact element 2a and be electrically isolated and separated from the latter by an air gap having a height substantially equal to the height of the chamber 8 (in a vertical direction, orthogonal to the plane of extension of the conductive sheets).

As shown schematically, the first and second contact elements 2a, 2b are electrically connected, via respective electric wires 9a, 9b, to the respective terminals 'a' and 'b' of the control unit 4, which is arranged externally of the electrical safety device 1 (and, not shown, to the termination connector element 100).

During operation, the application of a contact pressure P (as shown schematically by the arrow in the aforementioned Figure 2A) on the covering structure 7, at an external side thereof opposite the base structure 6, causes the two conductive sheets of the first and second contact elements 2a, 2b to come close together and subsequently contact each other, so as to cause their electrical contact, which is detected by the control unit 4 (for example in the manner previously described in detail).

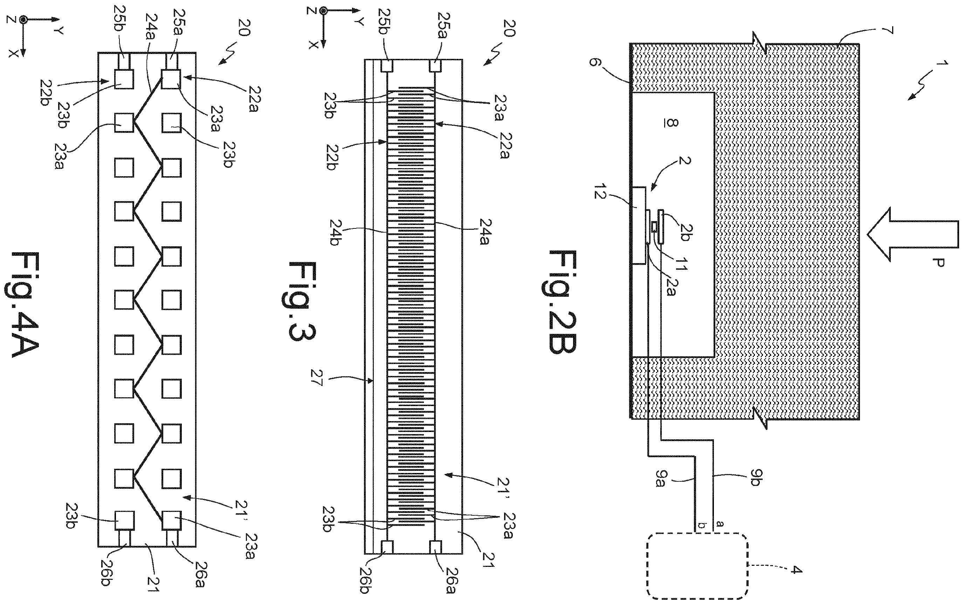

Figure 2B shows a second embodiment, also of a known type, of an electrical safety device 1, again of the bumper type.

In this embodiment, the first and second contact elements 2a, 2b of the sensitive element 2 consist of respective plates of conductive material, for example copper, extending in a length direction and having a width smaller than the corresponding width of the chamber 8. These plates are arranged on the base structure 6, one on top of the other at a certain separation distance, which is determined by the presence of spacer elements 11 arranged at regular intervals along their length and made of a suitable dielectric material.

As shown in the aforementioned Figure 2B, the first and second contact elements 2a, 2b are arranged in the chamber 8 on a support 12 coupled to the base structure 6.

As previously discussed, in this case too, the first and second contact elements 2a, 2b are electrically connected, via respective electric wires 9a, 9b, to the respective terminals, again indicated by 'a' and 'b', in turn connected to the control unit 4, which is arranged externally of the electrical safety device 1 (and to the termination connector element 100, not shown here).

As the pressure P exerted on the upper part of the covering structure 7 increases due to contact with an operator, the plate of the second contact element 2b (arranged above) touches the plate of the first contact element 2a (arranged below), resulting in the closing of the electrical contact.

The present Applicant has realized that known electrical safety devices, for example of the type described above with reference to Figures 2A and 2B, have some disadvantages, including:
- the presence of an excessive number of electrical wires and contacts to be insulated inside the cavity of the devices (in this regard, it should be considered that several, for example seven or eight, electrical safety devices may be connected in series, for example coupled to various parts of a same machinery or apparatus; furthermore, in the embodiment described above, it is necessary to provide the first and second return lines 101, 102 and the electrical connections towards the termination connector element 100);
- a general implementation difficulty (for example the electrical connection between the contact elements 2a, 2b and the respective electric wires 9a, 9b is generally complex);
- the absence of modularity: when the size or the areas to be covered vary, it is necessary to create new custom-designed devices; and
- the risk of oxidation of the conductive material of the contact elements 2a, 2b, with the consequent lack of electrical contact and failure to interrupt the operation of the associated machinery or apparatus.

WO 99/09570 A1 discloses a force-responsive sensor comprising upper and lower cover layers, the upper layer being resilient and flexible. An electrically conductive layer carries separate individual electrically insulating spacers which separate it from two electrically inductive members. Each of these members has a plurality of spaced resilient fingers, the fingers of the two members being inter-digitated. The members are formed as films on the layer. Where the members are not supported by the spacers, they are normally held apart from the conductive layer by the resilience of the upper layer. In response to an applied force, on or more of the fingers is pressed into contact with the conductive layer to enable the production of a corresponding electrical signal.

GB 2 261 115 A discloses a pressure sensitive mat having two electrically conductive plates spaced apart by non conductive compressible separators. Located adjacent to the separators are electrically conductive elements, e.g. washers fixed to the lower plate or integral portions of at least one of the plates, which extend across a fraction of the gap between the plates. The plates are sealed at their edges by a sealing bead and a metal strip is placed adjacent the sealing bead. When pressure is applied to the mat above a separator, the top plate is deformed and the separator is compressed until the plate contacts the element completing an electrical circuit. When pressure is applied at the edge of the mat the top plate and sealing bead are deformed until the top plate contacts the metal strip completing an electrical circuit. When pressure is applied above the gap away from a separator, direct electrical contact is made between the plates.

### DISCLOSURE OF INVENTION

The object of the present invention is to provide a solution which allows the previously highlighted problems to be solved.

According to the present invention, an electrical safety device is provided, as defined in the appended claims.

### BRIEF DESCRIPTION OF THE DRAWINGS

For a better understanding of the present invention, preferred embodiments thereof will now be described, purely by way of non-limiting example, with reference to the accompanying drawings, wherein:
- Figure 1 is a schematic block diagram of a contact-sensitive electrical safety device coupled to a control unit according to a known embodiment;
- Figures 2A and 2B show a schematic sectional view of a first and a second embodiment, respectively, of a contact-sensitive electrical safety device of a known type;
- Figure 3 shows a schematic top plan view of a sensitive element of a contact-sensitive electrical safety device according to a first embodiment of the present solution;
- Figures 4A and 4B show schematic top and bottom plan views, respectively, of a sensitive element of a contact-sensitive electrical safety device according to a second embodiment of the present solution;
- Figure 5 shows a schematic sectional view of a contact-sensitive electrical safety device according to one embodiment of the present solution;
- Figure 6A shows a schematic sectional view of a contact-sensitive electrical safety device according to a further embodiment of the present solution;
- Figure 6B shows a schematic top plan view, with parts removed for greater clarity, of the contact-sensitive electrical safety device of Figure 6A;
- Figures 7A and 7B show schematic top plan views of respective modular embodiments of the sensitive element of the contact-sensitive electrical safety device, according to further aspects of the present solution;
- Figure 8 shows a perspective view of a part of an industrial machinery in which the contact-sensitive electrical safety device can be used;
- Figure 9A shows a schematic sectional view of a sensitive element according to a further embodiment of the present solution; and
- Figure 9B shows a schematic top plan view, with parts removed for greater clarity, of the sensitive element of Figure 9A.

### BEST MODE FOR CARRYING OUT THE INVENTION

As will be clarified below, one aspect of the present solution comprises providing the sensitive element of a contact-sensitive electrical device by means of a Printed Circuit Board (PCB), on which both contact elements designed to electrically contact each other to switch the operating state of the electrical safety device are printed; the PCB can be provided in a rigid (for example, Fiberglass, CEM - Composite Epoxy Material, or the like) or flexible (for example, Mylar, Kapton, aluminum, copper or the like) support.

In detail, Figure 3 shows a sensitive element 20 of an electrical device, in particular a contact-sensitive electrical safety device (not shown here).

The sensitive element 20 comprises a (PCB) printed circuit base 21 defining a rigid or flexible support (as indicated above) and having a front face 21' on which a first contact arrangement 22a and a second contact arrangement 22b are provided by means of PCB printing techniques.

In the example, the printed circuit base 21 has an elongated rectangular shape with greatest dimension in a first direction x of a horizontal plane xy and smallest dimension (much smaller than the greatest dimension) in a second direction y of the same horizontal plane xy, orthogonal to the first direction x.

In a possible embodiment, the first and second contact arrangements 22a, 22b are made of copper (or a similar conductive material, for example gold) and covered with graphite (gold or other conductive material which does not undergo changes in surface conductivity over time); in particular, the covering, for example of graphite, prevents oxidation of the contacts, thereby ensuring electrical continuity for a longer time.

Each contact arrangement 22a, 22b comprises a plurality of conductive elements 23a, 23b provided on the front face 21' of the printed circuit base 21 and uniformly arranged and distributed along the extension of the printed circuit base 21 in the first direction x; in the example shown, the conductive elements 23a, 23b have an elongated shape, generally rectangular, along the second direction y.

The conductive elements 23a of the first contact arrangement 22a are alternated with the conductive elements 23b of the second contact arrangement 22b along the extension of the printed circuit base 21 (along the first direction x), thus providing an overall interdigitated contact arrangement.

Each contact arrangement 22a, 22b further comprises a respective electrical connection track 24a, 24b, which electrically connects the respective conductive elements 23a, 23b to each other and has a longitudinal extension along the first direction x; in the example, the electrical connection track 24a of the first contact arrangement 22a is arranged above the interdigitated pattern of the conductive elements 23a, 23b, whereas the electrical connection track 24b of the second contact arrangement 22b is arranged below the same interdigitated pattern of the conductive elements 23a, 23b (with respect to the second direction y).

Each contact arrangement 22a, 22b further comprises a respective input terminal 25a, 25b, which is connected to the respective electrical connection track 24a, 24b and arranged at a first edge portion of the printed circuit base 21; and a respective output terminal 26a, 26b, which is connected to the respective electrical connection track 24a, 24b and arranged at a second edge portion of the printed circuit base 21, which is longitudinally opposite the first edge portion along the first direction x.

In a possible implementation, reference is also made to the discussion related to Figure 1, input terminals 25a, 25b and output terminals 26a, 26b can be connected to the terminals (previously indicated by 'a' and 'b') of the control unit 4 (not shown here) arranged externally to the electrical safety device and designed to control the interruption or limitation of the operation of the associated machinery or apparatus 5 (also not shown here) and, respectively, of the termination connector element 100 (also not shown here).

Further electrical connection tracks, schematically indicated by 27, can also advantageously be provided on the same printed circuit base 21, for example to provide the first and second return lines 101, 102 connected to the third and fourth terminals ('c' and 'd') of the control unit 4 and of the termination connector element 100 (not shown here), to define the first and second electrical circuits.

It should be noted that in this first embodiment, the printed circuit base 21 is of the one-sided or single-sided type, i.e. only printed on its front face 21'.

During operation, and as will be described in greater detail below, the pressure due to impact of an operator on the electrical safety device causes a conductive actuator element (not shown here) to contact the front face 21' of the printed circuit base 21, at a contact area large enough to cause a short circuit between the first and the second contact arrangements 22a, 22b, and the associated switching of the operating state of the sensitive element 20 (for example, in the manner previously discussed with reference to Figure 1). In the absence of contact with an operator, the first and second contact arrangements 22a, 22b are again electrically separated (so that the electrical safety device is ready to detect a subsequent contact).

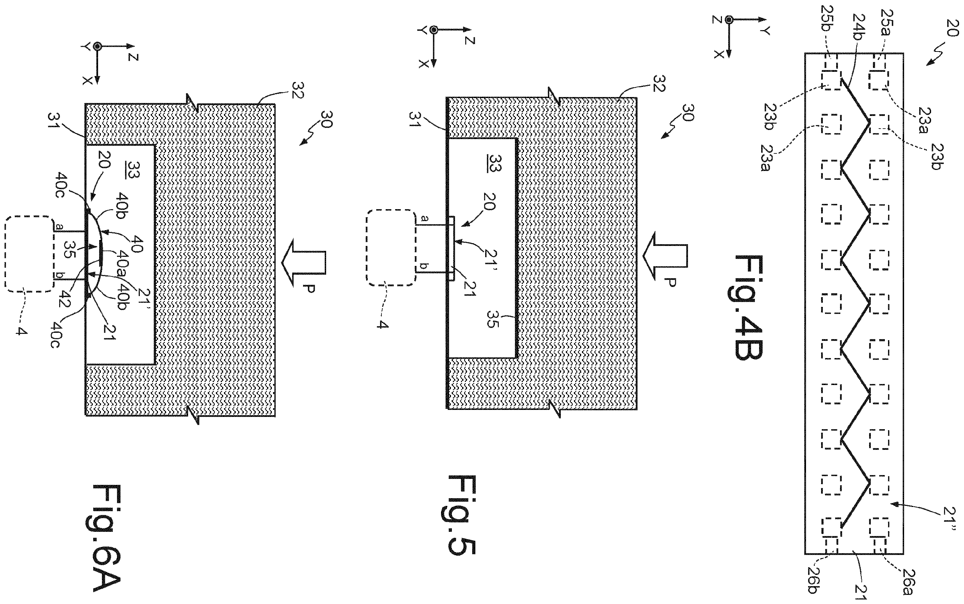

Figures 4A and 4B show a different embodiment of the sensitive element 20 of the contact-sensitive electrical safety device, in this case, too, provided by means of a printed circuit base 21 (of the rigid or flexible type).

In this embodiment too, the first and second contact arrangements 22a, 22b comprise a respective plurality of conductive elements 23a, 23b uniformly arranged and distributed along the main extension of the printed circuit base 21 (in the first direction x) and provided on the front face 21' of said printed circuit base 21 (as shown in Figure 4A).

In this case, these conductive elements 23a, 23b of the first and second contact arrangements 22a, 22b are aligned in two rows (along the first direction x), arranged above and below the printed circuit base 21 (relative to the second direction y). In particular, along each row, conductive elements 23a of the first contact arrangement 22a alternate with conductive elements 23b of the second contact arrangement 22b; furthermore, in the embodiment illustrated in Figure 4A, each conductive element 23a of the first contact arrangement 22a is aligned in the second direction y with a conductive element 23b of the second contact arrangement 22b).

In this second embodiment, the electrical connection track 24a electrically connecting the conductive elements 23a of the first contact arrangement 22a to each other is provided on the front face 21' of the printed circuit base 21 (as shown in Figure 4A); whereas the electrical connection track 24b electrically connecting the conductive elements 23b of the second contact arrangement 22b to each other is provided on a back face 21" of the same printed circuit base 21, opposite the aforesaid front face 21' (as shown in Figure 4B).

Therefore, it should be noted that the printed circuit base 21 is of the double-sided type, i.e. printed both on its front face 21' and on its back face 21".

Both of the aforementioned electrical connection tracks 24a, 24b, in this case, extend along a line with a triangular or "sawtooth" shape, wherein each segment of the line connects together conductive elements 23a, 23b of the first and, respectively, second contact arrangements 22a, 22b, arranged consecutively along the first direction x and on opposite sides of the printed circuit base 21 relative to the second direction y.

As evident from examination of the aforementioned Figures 4A and 4B, the electrical connection tracks 24a, 24b of the first and second contact arrangements 22a, 22b have a mirror pattern along the first direction x and are superimposed in the vertical direction (orthogonal to the horizontal plane xy).

In this second embodiment too, each contact arrangement 22a, 22b comprises the respective input terminal 25a, 25b and the respective output terminal 26a, 26b, in this case printed on the front face 21' of the printed circuit base 21.

Again as indicated above, further electrical connection tracks 27 (not shown here) can advantageously be provided on the same printed circuit base 21, in this case on the front face 21' and/or on the back face 21".

During operation, and as will be described in greater detail below, also in this case pressure due to contact of an operator with the electrical safety device causes a conductive actuator element (not shown here) to contact the front face 21' of the printed circuit base 21, at a contact area large enough to cause a short circuit between the first and the second contact arrangements 22a, 22b, and the associated switching of the operating state of the sensitive element 20.

Figure 5 shows an embodiment of a contact-sensitive electrical safety device, here indicated by 30, for example of the bumper type, which embeds the sensitive element 20 discussed above and the respective printed circuit base 21 (it should be noted that the following discussion applies regardless of the embodiment of the sensitive element 20, i.e. both the embodiment discussed with reference to Figure 3 and the embodiment discussed with reference to Figures 4A and 4B).

In more details, the electrical safety device 30 comprises a base structure 31; and a covering structure 32, for example made of a polyurethane foam or other material, for example an elastomeric material, soft to the touch and optionally covered with a suitable material interfacing with the external environment, coupled above the base structure 31 and internally defining a hollow chamber 33 having a bottom wall at said base structure 31.

The printed circuit base 21 of the sensitive element 20 is coupled, for example by gluing, to the base structure 31, at the bottom wall of the chamber 33, with the front face 21' facing the same chamber 33. In a manner not illustrated here, a suitable seat designed to house the printed circuit base 21 can be provided inside the base structure 31.

In this embodiment, a conductive actuator element 35, for example an aluminium sheet, is coupled to a top wall of the chamber 33, so as to face the front face 21' of the printed circuit base 21, from which it is normally separated by an air gap having a height substantially equal to the height of the chamber 33.

The same Figure 5 schematically shows respective terminals, again indicated by 'a' and 'b', which are electrically connected to the first and second contact arrangements 22a, 22b and can in turn be connected to the control unit 4, which is arranged externally to the electrical safety device 30 (as previously discussed).

During operation, the application of a contact pressure P (as shown schematically by the arrow in the aforementioned Figure 5) on the covering structure 32 causes the conductive actuator element 35 and the front face 21' of the printed circuit base 21 firstly to come close together and then to contact each other, thus causing, as previously described, electrical contact between the first and the second contact arrangements 22a, 22b, which can be detected by the control unit 4.

In particular, it should be noted that, advantageously, there is no need for an electrical connection to the aforementioned conductive actuator element 35, which in fact has the sole function of causing electrical contact between the first and the second contact arrangements 22a, 22b (which are instead connected to respective electric potentials, as discussed above). Furthermore, it is sufficient for this short circuit to even only occur locally at a restricted area of the front face 21' of the printed circuit base 21; therefore, the conductive actuator element 35 may also not be electrically and/or mechanically continuous in the longitudinal direction and, for example, may consist of a plurality of portions separately and individually coupled to the top wall of the chamber 33.

Furthermore, in the event that the material making up the covering structure 32 is conductive, a distinct conductive actuator element 35 may not be present, as the electrical contact between the first and the second contact arrangements 22a, 22b in response to the contact pressure P, is in this case provided by the same covering structure 32, which acts itself as the conductive actuator element.

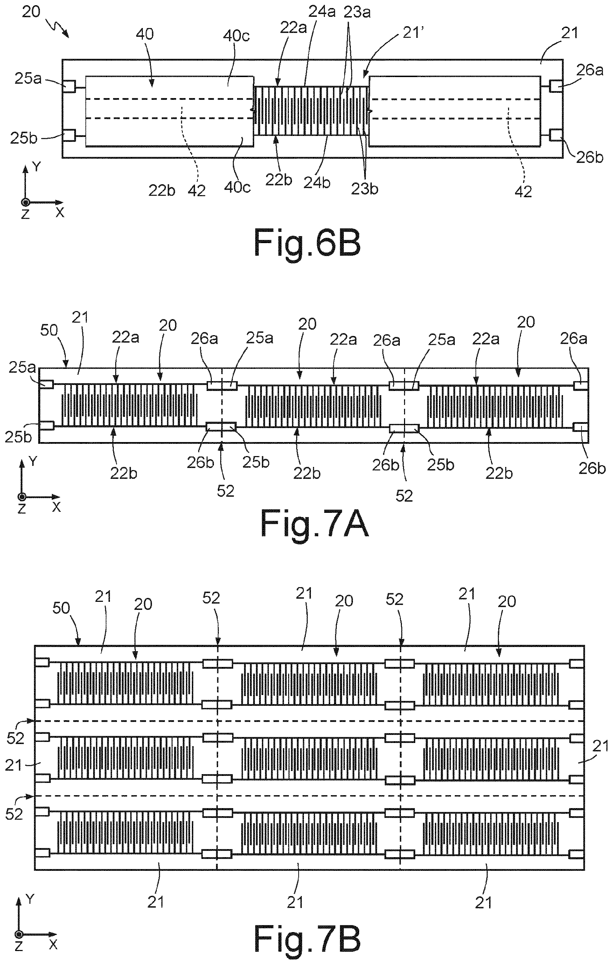

Figures 6A and 6B illustrate a further embodiment of the contact-sensitive electrical safety device, again indicated by 30, in the example again of the bumper type, which embeds the sensitive element 20 and the related printed circuit base 21 (again, it should be noted that the following discussion applies regardless of the embodiment of the same sensitive element 20).

This embodiment differs from the previous one in that it provides an actuation membrane 40 coupled to the front face 21' of the printed circuit base 21, for example made of a rubber or a suitable silicone material.

In particular, the actuation membrane 40 comprises a central portion 40a arranged above and facing the first and second contact arrangements 22a, 22b printed on the front face 21' of the printed circuit base 21 (it should be noted that Figure 6B shows, purely by way of example, the interdigitated pattern of the first and second contact arrangements 22a, 22b); a separation gap is normally present between the central portion 40a of the actuation membrane 40 and the printed circuit base 21. This central portion 40a of the actuation membrane 40 carries, in a position facing the contact arrangements 22a, 22b, a conductive band 42 made of a suitable material, for example a conductive rubber. This conductive band 42, in the illustrated embodiment, has a longitudinal extension (in the first direction x) substantially corresponding to the extension of the printed circuit base 21 and a width extension along the second direction y smaller than the corresponding extension of the first and second contact arrangements 22a, 22b, being arranged centrally relative to the same contact arrangements 22a, 22b.

The actuation membrane 40 further comprises side wall portions 40b, which are arranged laterally to the aforementioned central portion 40a, have elastic, springlike characteristics, and define the aforementioned separation gap between the central portion 40a of the actuation membrane 40 and the printed circuit base 21; and coupling portions 40c, which are arranged laterally to the side wall portions 40b and are coupled, for example by gluing, to the printed circuit base 21.

In this embodiment too, the electrical safety device 30 comprises the base structure 31 and the covering structure 32 internally defining the hollow chamber 33; and the printed circuit base 21 of the sensitive element 20 is coupled to the base structure 31, at the bottom wall of the chamber 33, with the front face 21' facing the same chamber 33.

In this case, however, no conductive element coupled to the covering structure 32 is provided, since in this case it is the aforementioned conductive band 42 carried by the actuation membrane 40 which acts as the conductive actuator element 35, designed to define the electrical contact between the first and the second contact arrangements 22a, 22b.

In other words, in this embodiment, the printed circuit base 21 and the coupled actuation membrane 40 make up a distinct, so-called "stand-alone" sensitive element, which is capable of switching its operating state in the presence of the contact pressure P due to contact, without the intervention of any external conductive element.

During operation, the application of the contact pressure P on the covering structure 32 causes the covering structure 32 and the actuation membrane 40 firstly to come close together and then to contact each other. Consequently, the actuation membrane 40 deforms and the conductive band 42 carried by its central portion 40a comes into contact with the underlying contact arrangements 22a, 22b. Following actuation, the actuation membrane 40 then returns to the position at rest, with the separation gap between the aforementioned central portion 40a and the underlying printed circuit base 21.

It should be noted that, as an alternative to the above, if at least the central portion 40a of the actuation membrane 40 is made of a suitable conductive material, the aforementioned conductive band 42 may not be present, as, in this case, it is the same central portion 40a that acts as the conductive actuator element 35 of the electrical safety device 30.

It should further be noted that, in this embodiment too, the conductive band 42 (or the same actuation membrane 40, if it is made of a conductive material) need not be electrically connected, thus only acting as a contact actuator element; furthermore, no continuity of the same conductive band 42 (or of the same actuation membrane 40) is required, which, in fact, can also consist of several separate and distinct portions.

The advantages of the present solution are clear from the foregoing description.

In any case, the advantages include the following:
- implementation simplicity and cost-effectiveness, since all the conductive elements subject to the passage of electric current are tracks of a (PCB) printed circuit base;
- the printed circuit base is industrially produced by automatic electronic equipment with consequent elimination of the human factor and possible associated assembly errors;
- a drastic reduction in wiring, since all the circuitry being on the printed circuit base means that all the intermediate electrical connections are already provided as tracks on the same board;
- elimination of all cables inside the electrical safety device;
- no need for electrical continuity of the conductive actuator element, since the same element has the sole function of establishing the short circuit between the contact arrangements printed on the printed circuit base (it is therefore also possible to use a number of separate portions even without electrical continuity);
- reduced risk of oxidation, thanks to the process of covering the electric tracks, for example with graphite or gold, which prevents oxide formation, thereby guaranteeing electrical continuity over time.

A further advantage of the described solution is that it allows modular construction; it is in fact possible to provide a plurality of printed circuit bases 21, each forming a single modular unit, in a single printed circuit board (PCB).

For example, as shown in Figure 7A, a plurality of printed circuit bases 21 can be provided in a single PCB 50, aligned with and coupled to one another in the first direction x, with a fixed interconnection pitch. In particular, the circuits provided by the respective contact arrangements 22a, 22b are connected in series, as the output terminals 26a, 26b of one printed circuit base 21 are connected to the input terminals 25a, 25b of a consecutive printed circuit base 21.

Advantageously, at the coupling regions between successive printed circuit bases 21, the PCB 50 has structural weakening regions 52, for example provided by means of micro-holes defining a kind of cracking in the material of the same PCB 50. In this way, it is easy to separate one or more printed circuit bases 21 along the structural weakening regions 52, which therefore represent areas suitable for cutting, so as to obtain a desired length of the electrical safety device 30, in the example in the first direction x.

It should be noted that this modular construction applies indiscriminately to all embodiments of the electrical safety device 30, including the stand-alone one described with reference to Figures 6A and 6B. In this case, sections of the actuation membrane 40 with the same length as each printed circuit base 21 (i.e., as each modular element) may be provided, since, as described above, continuity of the same actuation membrane 40 (and of the associated conductive band 42) is not required.

As shown in Figure 7B, modularity can be provided not only in the first direction x (forming "rows" of printed circuit bases 21), but, in a two-dimensional manner, also in the second direction y (forming "columns" of printed circuit bases 21), so as to cover a desired surface portion with the resulting electrical safety device 30.

In this case, the structural weakening regions 52 are provided between consecutive printed circuit bases 21, not only along the first direction x, but also along the second direction y (extending along the entire width and the entire length of said printed circuit bases 21).

Furthermore, in a manner not shown herein, suitable electrical connection elements are provided in this case for suitably connecting together the electrical connection tracks 24a, 24b of the various rows of printed circuit bases 21, so as to connect all the contact arrangements 22a, 22b to one another.

As indicated above, the electrical safety device 30 according to the present solution can have several uses, for example in the industrial field, to interrupt or limit the operation of electrical machinery or devices.

By way of example, the electrical safety device 30 can be advantageously used in a machine for processing wood panels, for example of the type comprising an elongated base provided with longitudinal guide members parallel to a first, substantially horizontal direction; a plurality of cross members mounted between the longitudinal guide members parallel to a second, substantially horizontal direction transverse to the first direction; and at least one support block mounted on each cross member to hold at least one panel.

The machine is also provided with an overhead crane, which is movable along the base in the first direction, extends above the base in the second direction, and normally supports a processing head equipped with a tool for removing panel chips.

Each support block is positioned on the respective cross member according to the dimensions of the panels to be processed and is bounded by a substantially flat upper face which can be connected to a pneumatic suction device via a valve device operated by the same panels.

The upper faces of the support blocks are coplanar with each other and define, as a whole, a substantially horizontal support surface suitable to support at least one panel to be processed.

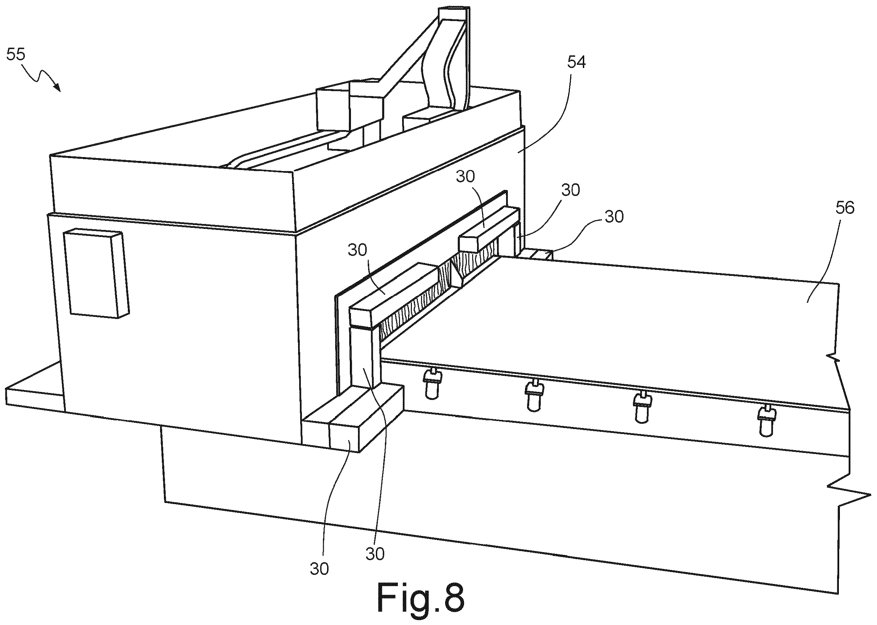

Figure 8 schematically shows a possible embodiment of the aforementioned overhead crane, indicated here by 54, of the machine for processing wood panels, schematically indicated by 55.

In particular, it should be noted that a plurality of electrical safety devices 30 (of the bumper type) are coupled to portions of the overhead crane 54 which, in use, can come into contact with an operator, for example, at side end portions and at a central opening, intended to be engaged by the aforementioned elongated base (here schematically shown and indicated by 56) of the machine 55.

In a manner not illustrated herein, but as will be clear to a person skilled in the field, additional safety devices, for example of the platform or carpet type, may also be coupled to the machine 55, in order to interrupt or at least limit the operation of the same machine 55 when an operator enters an area considered to be at risk.

Finally, it is clear that modifications and variations can be made to what is described and illustrated herein, without thereby departing from the scope of the present invention, as defined in the appended claims.

For example, it is pointed out that, in a manner not shown herein, further circuit elements can be advantageously provided in the printed circuit base 21 of the electrical safety device 30, for example additional electrical connection tracks, which could for example be required by safety regulations to ensure redundancy in the electrical connections between different electrical safety devices 30 (functionally connected in series) associated with the same machine or device.

Furthermore, it should be noted that several uses can be provided for the contact-sensitive electrical device described herein, mainly in the industrial field, but also in the civil field, for example, to interrupt the operation of industrial doors or electrically-closing doors, in the event of contact or impact with a user.

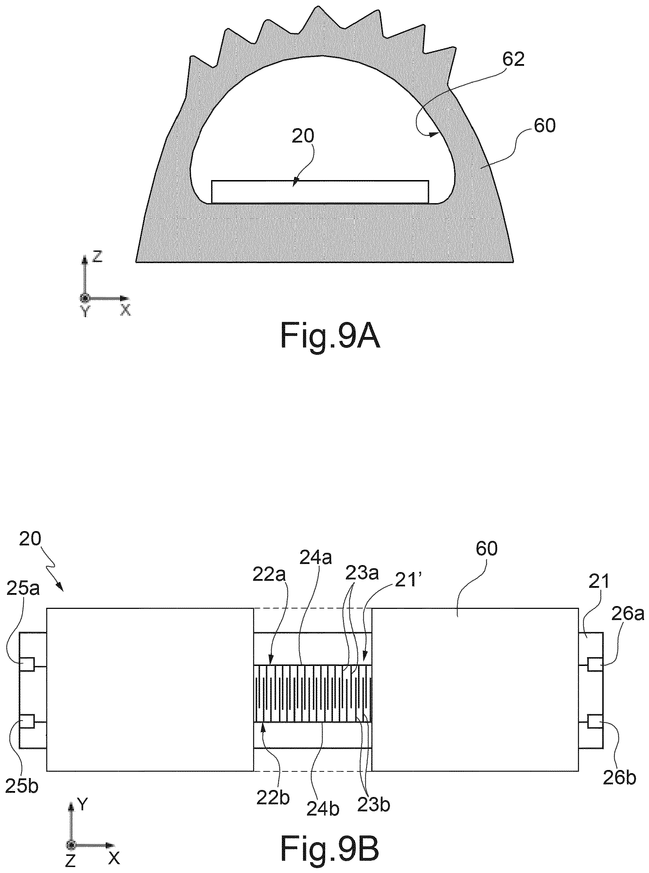

In particular, as shown in Figures 9A, 9B, in a further embodiment, the sensitive element 20 of the contact-sensitive electrical device can be embedded within a deformable structure 60, for example a gasket or sheath, to form, for example, a contact- or pressure-sensitive edge device.

In this embodiment, the printed circuit base 21 of the sensitive element 20, preferably made of a flexible dielectric material, is coupled to an internal wall of the deformable structure 60, in a cavity 62 internally defined by the same deformable structure 60. As shown in Figure 9B, the input terminals 25a, 25b and the output terminals 26a, 26b of the sensitive element 20 can suitably protrude from the deformable structure 60, to allow the electrical connection thereof. As an alternative to what is illustrated, the input terminals 25a, 25b and output terminals 26a, 26b may remain inside the deformable structure 60, electrically connected with appropriate cables that carry the signals outside the same structure.

The deformable structure 60 (of which Figure 9A shows a profile having a shape illustrated purely by way of example - this profile in fact can have any desired shape) can be completely or partially covered on the internal wall with a conductive material or, alternatively, be itself made of a suitable conductive material (for example, a rubber or silicone material made conductive by doping, or any other conductive material, for example a plastic material).

A separation gap is normally present between the printed circuit base 21 (in particular its upper face 21') and a facing portion of the aforementioned internal wall of the deformable structure 60, so that in conditions at rest the sensitive element 20 remains isolated.

In the event of compression, following a contact acting on the deformable structure 60 (and the consequent contact pressure P), the deformable structure 60 deforms elastically and its internal (conductive) wall comes into contact with the contact arrangements 22a, 22b of the sensitive element 20, thereby causing the short circuit between the same contact arrangements 22a, 22b. It should therefore be noted that, in this case, it is the same deformable structure 60 that acts as the conductive actuator element 35, suitable for defining the electrical contact between the first and the second contact arrangements 22a, 22b.

Subsequently, when the compression ceases (in the absence of the contact pressure P), the deformable structure 60 returns to its original shape, with the separation gap between the printed circuit base 21 and the internal wall.

## Claims

1. An electronic machinery or apparatus (55), comprising at least one contact-sensitive electrical safety device (30) and a control unit (4), electrically coupled to said contact-sensitive electrical safety device (30),
the contact-sensitive electrical safety device (30), comprising:
a sensitive element (20); and
a conductive actuator element (35) configured to switch an operating state of said sensitive element (20) in response to a contact acting on said electrical safety device (30),
whereby said sensitive element (20) comprises at least one printed circuit base (21) on which a first and a second contact arrangements (22a, 22b) are provided, normally electrically separated; said conductive actuator element (35) being configured to establish an electrical contact between said first and second contact arrangements (22a, 22b), in response to said contact,
**characterized in that**
the control unit (4) is configured to interrupt or limit the operation of said electronic machinery or apparatus (55) upon detection of switching of the operating state of said sensitive element (20).

2. The electronic machinery or apparatus according to claim 1, wherein said printed circuit base (21) has a front face (21'), and wherein each one of said first and second contact arrangements (22a, 22b) comprises a respective plurality of conductive elements (23a, 23b) provided on said front face (21') and also a respective electrical connection track (24a, 24b), which electrically connects the conductive elements (23a, 23b) of the respective plurality to one another; wherein said conductive actuator element (35) is configured to establish an electrical contact between a number of conductive elements (23a) of said first contact arrangement (22a) and a respective number of conductive elements (23b) of said second contact arrangement (22b).

3. The electronic machinery or apparatus according to claim 2, wherein said printed circuit base (21) has a main extension in a first direction (x); and wherein said conductive elements (23a, 23b) of said first and second contact arrangements (22a, 22b) are distributed along said main extension direction (x), conductive elements (23a) of the first contact arrangement (22a) being alternated with conductive elements (23b) of the second contact arrangement (22b) along said first direction (x).

4. The electronic machinery or apparatus according to claim 3, wherein each one of said first and second contact arrangements (22a, 22b) further comprises a respective input terminal (25a, 25b), which is connected to the respective electrical connection track (24a, 24b) and arranged at a first edge portion of the printed circuit base (21); and a respective output terminal (26a, 26b), which is connected to the respective electrical connection track (24a, 24b) and arranged at a second edge portion of the printed circuit base (21), which is longitudinally opposite the first edge portion along said first direction (x).

5. The electronic machinery or apparatus according to claim 3 or 4, wherein said conductive elements (23a, 23b) of said first and second contact arrangements (22a, 22b) have an elongated shape along a second direction (y), which is orthogonal to said first direction (x), and are arranged, as a whole, according to an interdigitated pattern; and wherein the electrical connection tracks (24a, 24b) of said first and second contact arrangements (22a, 22b) are both provided on said front face (21') and have a longitudinal extension along said first direction (x), the electrical connection track (24a) of the first contact arrangement (22a) being arranged on an upper side, and the electrical connection track (24b) of the second contact arrangement (22b) being arranged on a lower side, of the interdigitated pattern of the conductive elements (23a, 23b) relative to said second direction (y).

6. The electronic machinery or apparatus according to claim 3 or 4, wherein said printed circuit base (21) further comprises a back face (21") opposite said front face (21'); and wherein the conductive elements (23a, 23b) of said first and second contact arrangements (22a, 22b) are aligned along said first direction (x) in two rows arranged on an upper side and on a lower side of the printed circuit base (21) relative to said second direction (y), conductive elements (23a) of the first contact arrangement (22a) being alternated with conductive elements (23b) of the second contact arrangement (22b) along each one of said rows; and wherein the electrical connection track (24a) electrically connecting the conductive elements (23a) of the first contact arrangement (22a) to one another is provided on the front face (21') of the printed circuit base (21) and the electrical connection track (24b) electrically connecting the conductive elements (23b) of the second contact arrangement (22b) to one another is provided on the back face (21") of the printed circuit base (21).

7. The electronic machinery or apparatus according to any one of the preceding claims, wherein said sensitive element (20) has a modular configuration and comprises a PCB board (50) wherein a plurality of printed circuit bases (21) are provided, which are aligned with and coupled to one another in a first (x) and/or second (y) direction; wherein said PCB board (50) has structural weakening regions (52) at the coupling regions between adjacent printed circuit bases (21) .

8. The electronic machinery or apparatus according to any one of the preceding claims, further comprising a base structure (31) and a covering structure (32) coupled above the base structure (31), internally defining a hollow chamber (33) having a bottom wall at said base structure (31) and housing said sensitive element (20); wherein said printed circuit base (21) is coupled on said base structure (31), at the bottom wall of the chamber (33), with said front face (21') facing said chamber (33).

9. The electronic machinery or apparatus according to claim 8, wherein said conductive actuator element (35) is coupled to a top wall of the chamber (33), facing the front face (21') of said printed circuit base (21), from which it is normally separated by a separation gap.

10. The electronic machinery or apparatus according to any one of claims 1-8, further comprising an actuation membrane (40) coupled on, and in contact with, the upper face (21') of the printed circuit base (21); said actuation membrane (40) having: a central portion (40a) arranged above and facing the first and the second contact arrangement (22a, 22b); side wall portions (40b), which are arranged laterally to the central portion (40a) and define a separation gap between said central portion (40a) and said printed circuit base (21); and coupling portions (40c), which are arranged laterally to the side wall portions (40b) and are coupled on, and in contact with, the printed circuit base (21).

11. The electronic machinery or apparatus according to claim 10, wherein said central portion (40a) of the actuation membrane (40) carries, in a position facing said contact arrangements (22a, 22b), a conductive band (42); and wherein said conductive band forms said conductive actuator element (35) .

12. The electronic machinery or apparatus according to claim 10, wherein said central portion (40a) of the actuation membrane (40) is made of a conductive material and forms said conductive actuator element (35).

13. The electronic machinery or apparatus according to any one of claims 1-8, comprising a deformable structure (60) internally defining a cavity (62) in which said sensitive element (20) is housed; the printed circuit base (21) of the sensitive element (20) being coupled to an internal wall of the deformable structure (60) inside said cavity (62), at a separation distance from said internal wall, in a condition at-rest; wherein the deformable structure (60) is completely or partially covered on the internal wall with a conductive material or, alternatively, is itself made of a conductive material, and is configured to contact said printed circuit base (21) through compression due to a contact pressure (P).

14. The electronic machinery or apparatus according to any one of the preceding claims, wherein said first and second contact arrangements (22a, 22b) are made of a conductive material coated with graphite, gold, or other conductive material that does not undergo changes in surface conductivity over time.

15. The electronic machinery or apparatus according to any one of the preceding claims, wherein at least one electrical track (27) is further provided on said printed circuit base (21), which is designed to form one and a same electrical circuit with said first or second contact arrangement (22a, 22b).

16. The electronic machinery or apparatus according to any one of the preceding claims, for processing components made of wood or the like, comprising: an elongated base (56) designed to support said components made of wood or the like; and an overhead crane (54), which extends crosswise above, and movable relative to, said elongated base (56) and carries a processing head to process said components made of wood or the like; wherein said at least one electrical safety device (30) is coupled to said overhead crane (54).

17. The electronic machinery or apparatus according to any one of the preceding claims, wherein said electrical safety device (30) is a bumper device or a sensitive edge device.

## Patentansprüche

1. Elektronische Maschine oder Gerät (55) mit mindestens einer berührungsempfindlichen elektrischen Sicherheitsvorrichtung (30) und einer Steuereinheit (4), die elektrisch mit der berührungsempfindlichen elektrischen Sicherheitsvorrichtung (30) gekoppelt ist, wobei die berührungsempfindliche elektrische Sicherheitsvorrichtung (30) Folgendes umfasst:
ein empfindliches Element (20); und
ein leitendes Betätigungselement (35), das so konfiguriert ist, dass es einen Betriebszustand des empfindlichen Elements (20) als Reaktion auf einen auf die elektrische Sicherheitsvorrichtung (30) wirkenden Kontakt schaltet,
wobei das empfindliche Element (20) mindestens eine gedruckte Schaltungsbasis (21) umfasst, auf der eine erste und eine zweite Kontaktanordnung (22a, 22b) vorgesehen sind, die normalerweise elektrisch getrennt sind; wobei das leitende Betätigungselement (35) so konfiguriert ist, dass es als Reaktion auf den Kontakt einen elektrischen Kontakt zwischen der ersten und der zweiten Kontaktanordnung (22a, 22b) herstellt, **dadurch gekennzeichnet, dass** die Steuereinheit (4) so konfiguriert ist, dass sie den Betrieb der elektronischen Maschine oder des Geräts (55) unterbricht oder einschränkt, wenn ein Umschalten des Betriebszustands des empfindlichen Elements (20) erfasst wird.

2. Elektronische Maschine oder Gerät nach Anspruch 1, wobei die gedruckte Schaltungsbasis (21) eine Vorderseite (21') aufweist und wobei jede der ersten und zweiten Kontaktanordnungen (22a, 22b) eine jeweilige Vielzahl von leitenden Elementen (23a, 23b), die auf der Vorderseite (21') vorgesehen sind, und auch eine jeweilige elektrische Verbindungsspur (24a, 24b) umfasst, die die leitenden Elemente (23a, 23b) der jeweiligen Vielzahl elektrisch miteinander verbindet; wobei das leitende Betätigungselement (35) so konfiguriert ist, dass es einen elektrischen Kontakt zwischen einer Anzahl von leitenden Elementen (23a) der ersten Kontaktanordnung (22a) und einer entsprechenden Anzahl von leitenden Elementen (23b) der zweiten Kontaktanordnung (22b) herstellt.

3. Elektronische Maschine oder Gerät nach Anspruch 2, wobei die gedruckte Schaltungsbasis (21) eine Haupterstreckung in einer ersten Richtung (x) aufweist; und wobei die leitenden Elemente (23a, 23b) der ersten und zweiten Kontaktanordnung (22a, 22b) entlang der Haupterstreckungsrichtung (x) verteilt sind, wobei sich leitende Elemente (23a) der ersten Kontaktanordnung (22a) mit leitenden Elementen (23b) der zweiten Kontaktanordnung (22b) entlang der ersten Richtung (x) abwechseln.

4. Elektronische Maschine oder Gerät nach Anspruch 3, wobei jede der ersten und zweiten Kontaktanordnungen (22a, 22b) ferner einen jeweiligen Eingangsanschluss (25a, 25b) umfasst, der mit der jeweiligen elektrischen Verbindungsspur (24a, 24b) verbunden und an einem ersten Randabschnitt der gedruckten Schaltungsbasis (21) angeordnet ist; und einen jeweiligen Ausgangsanschluss (26a, 26b), der mit der jeweiligen elektrischen Verbindungsspur (24a, 24b) verbunden ist und an einem zweiten Randabschnitt der gedruckten Schaltungsbasis (21) angeordnet ist, der in Längsrichtung gegenüber dem ersten Randabschnitt entlang der ersten Richtung (x) liegt.

5. Elektronische Maschine oder Gerät nach Anspruch 3 oder 4, wobei die leitenden Elemente (23a, 23b) der ersten und zweiten Kontaktanordnungen (22a, 22b) eine längliche Form entlang einer zweiten Richtung (y) haben, die orthogonal zu der ersten Richtung (x) ist, und als Ganzes gemäß einem ineinandergreifenden Muster angeordnet sind; und wobei die elektrischen Verbindungsspuren (24a, 24b) der ersten und zweiten Kontaktanordnungen (22a, 22b) beide auf der Vorderseite (21') vorgesehen sind und eine Längserstreckung entlang der ersten Richtung (x) aufweisen, wobei die elektrische Verbindungsspur (24a) der ersten Kontaktanordnung (22a) auf einer oberen Seite und die elektrische Verbindungsspur (24b) der zweiten Kontaktanordnung (22b) auf einer unteren Seite des ineinandergreifenden Musters von leitenden Elementen (23a, 23b) relativ zu der zweiten Richtung (y) angeordnet ist

6. Elektronische Maschine oder Gerät nach Anspruch 3 oder 4, wobei die gedruckte Schaltungsbasis (21) ferner eine Rückseite (21") gegenüber der Vorderseite (21') aufweist; und wobei die leitenden Elemente (23a, 23b) der ersten und zweiten Kontaktanordnung (22a, 22b) entlang der ersten Richtung (x) in zwei Reihen ausgerichtet sind, die auf einer Oberseite und einer Unterseite der gedruckten Schaltungsbasis (21) relativ zu der zweiten Richtung (y) angeordnet sind, wobei sich leitende Elemente (23a) der ersten Kontaktanordnung (22a) mit leitenden Elementen (23b) der zweiten Kontaktanordnung (22b) entlang jeder der Reihen abwechseln; und wobei die elektrische Verbindungsspur (24a), die die leitenden Elemente (23a) der ersten Kontaktanordnung (22a) elektrisch miteinander verbindet, auf der Vorderseite (21') der gedruckten Schaltungsbasis (21) vorgesehen ist und die elektrische Verbindungsspur (24b), die die leitenden Elemente (23b) der zweiten Kontaktanordnung (22b) elektrisch miteinander verbindet, auf der Rückseite (21") der gedruckten Schaltungsbasis (21) vorgesehen ist.

7. Elektronische Maschine oder Gerät nach einem der vorhergehenden Ansprüche, wobei das empfindliche Element (20) eine modulare Konfiguration aufweist und eine PCB-Platte (50) umfasst, auf der mehrere gedruckte Schaltungsbasen (21) vorgesehen sind, die in einer ersten (x) und/oder zweiten (y) Richtung miteinander fluchten und miteinander gekoppelt sind; wobei die PCB-Platte (50) strukturelle Schwächungsbereiche (52) an den Kopplungsbereichen zwischen benachbarten gedruckten Schaltungsbasen (21) aufweist.

8. Elektronische Maschine oder Gerät nach einem der vorhergehenden Ansprüche, ferner mit einer Basisstruktur (31) und einer Abdeckungsstruktur (32), die über der Basisstruktur (31) gekoppelt ist und im Inneren eine hohle Kammer (33) definiert, die eine Bodenwand an der Basisstruktur (31) aufweist und das empfindliche Element (20) aufnimmt; wobei die Basis (21) der gedruckten Schaltung auf der Basisstruktur (31) an der Bodenwand der Kammer (33) gekoppelt ist, wobei die Vorderseite (21') der Kammer (33) zugewandt ist

9. Elektronische Maschine oder Gerät nach Anspruch 8, wobei das leitende Betätigungselement (35) mit einer oberen Wand der Kammer (33) verbunden ist, die der Vorderseite (21') der gedruckten Schaltungsbasis (21) zugewandt ist, von der es normalerweise durch einen Trennungsspalt getrennt ist.

10. Elektronische Maschine oder Gerät nach einem der Ansprüche 1 bis 8, ferner mit einer Betätigungsmembran (40), die auf der Oberseite (21') der gedruckten Schaltungsbasis (21) angebracht ist und mit dieser in Kontakt steht; wobei die Betätigungsmembran (40) Folgendes aufweist: einen zentralen Abschnitt (40a), der oberhalb der ersten und der zweiten Kontaktanordnung (22a, 22b) angeordnet ist und diesen zugewandt ist; Seitenwandabschnitte (40b), die seitlich zum zentralen Abschnitt (40a) angeordnet sind und einen Trennspalt zwischen dem zentralen Abschnitt (40a) und der gedruckten Schaltungsbasis (21) definieren; und Kopplungsabschnitte (40c), die seitlich zu den Seitenwandabschnitten (40b) angeordnet sind und mit der gedruckten Schaltungsbasis (21) gekoppelt sind und mit dieser in Kontakt stehen.

11. Elektronische Maschine oder Gerät nach Anspruch 10, wobei der zentrale Abschnitt (40a) der Betätigungsmembran (40) in einer den Kontaktanordnungen (22a, 22b) zugewandten Position ein leitfähiges Band (42) trägt; und wobei das leitfähige Band das leitfähige Betätigungselement (35) bildet.

12. Elektronische Maschine oder Gerät nach Anspruch 10, wobei der zentrale Teil (40a) der Betätigungsmembran (40) aus einem leitfähigen Material besteht und das leitfähige Betätigungselement (35) bildet.

13. Elektronische Maschine oder Gerät nach einem der Ansprüche 1-8, mit einer verformbaren Struktur (60), die innen einen Hohlraum (62) definiert, in dem das empfindliche Element (20) untergebracht ist; wobei die gedruckte Schaltungsbasis (21) des empfindlichen Elements (20) mit einer Innenwand der verformbaren Struktur (60) innerhalb des Hohlraums (62) in einem Trennungsabstand von der Innenwand in einem Ruhezustand verbunden ist; wobei die verformbare Struktur (60) vollständig oder teilweise an der Innenwand mit einem leitfähigen Material bedeckt ist oder alternativ selbst aus einem leitfähigen Material hergestellt ist und so konfiguriert ist, dass sie die gedruckte Schaltungsbasis (21) durch Kompression aufgrund eines Kontaktdrucks (P) kontaktiert.

14. Elektronische Maschine oder Gerät nach einem der vorhergehenden Ansprüche, wobei die erste und die zweite Kontaktanordnung (2 2a, 22b) aus einem leitfähigen Material bestehen, das mit Graphit, Gold oder einem anderen leitfähigen Material beschichtet ist, das im Laufe der Zeit keine Änderungen der Oberflächenleitfähigkeit erfährt.

15. Elektronische Maschine oder Gerät nach einem der vorhergehenden Ansprüche, wobei mindestens eine elektrische Leiterbahn (27) auf der gedruckten Schaltungsbasis (21) vorgesehen ist, die so ausgelegt ist, dass sie mit der ersten oder zweiten Kontaktanordnung (22a, 22b) ein und denselben Stromkreis bildet.

16. Elektronische Maschine oder Gerät nach einem der vorhergehenden Ansprüche zum Bearbeiten von Bauteilen aus Holz oder dergleichen, umfassend: eine längliche Basis (56), die zum Tragen der Bauteile aus Holz oder dergleichen ausgelegt ist; und einen Brückenkran (54), der sich quer über die längliche Basis (56) erstreckt und relativ zu dieser beweglich ist und einen Bearbeitungskopf zum Bearbeiten der Bauteile aus Holz oder dergleichen trägt; wobei die mindestens eine elektrische Sicherheitsvorrichtung (30) mit dem Brückenkran (54) gekoppelt ist.

17. Elektronische Maschine oder Gerät nach einem der vorhergehenden Ansprüche, wobei die elektrische Sicherheitseinrichtung (30) eine Stoßfängereinrichtung oder eine empfindliche Kanteneinrichtung ist.

## Revendications

1. Machinerie ou appareil électroniques (55), comprenant au moins un dispositif de sécurité électrique (30) sensible au contact et une unité de commande (4), couplée électriquement audit dispositif de sécurité électrique (30) sensible au contact,
le dispositif de sécurité électrique (30) sensible au contact comprenant :
un élément sensible (20) ; et
un élément actionneur conducteur (35) configuré pour commuter un état de fonctionnement dudit élément sensible (20) en réponse à un contact agissant sur ledit dispositif de sécurité électrique (30),
ledit élément sensible (20) comprenant au moins une base de circuit imprimé (21) sur laquelle un premier et un second agencement de contacts (22a, 22b) sont fournis, normalement séparés électriquement ; ledit élément actionneur conducteur (35) étant configuré pour établir un contact électrique entre lesdits premier et second agencements de contacts (22a, 22b), en réponse audit contact,
**caractérisés en ce que**
l'unité de commande (4) est configurée pour interrompre ou limiter le fonctionnement de ladite machinerie ou dudit appareil électronique (55) lors de la détection de la commutation de l'état de fonctionnement dudit élément sensible (20).

2. Machinerie ou appareil électroniques selon la revendication 1, dans lesquels ladite base de circuit imprimé (21) a une face avant (21'), et dans lesquels chacun desdits premier et second agencements de contacts (22a, 22b) comprend une pluralité respective d'éléments conducteurs (23a, 23b) fournis sur ladite surface avant (21') et également une piste de connexion électrique (24a, 24b) respective, qui connecte électriquement les éléments conducteurs (23a, 23b) de la pluralité respective les uns aux autres ; dans lesquels ledit élément actionneur conducteur (35) est configuré pour établir un contact électrique entre un nombre d'éléments conducteurs (23a) dudit premier agencement de contacts (22a) et un nombre respectif d'éléments conducteurs (23b) dudit second agencement de contacts (22b).

3. Machinerie ou appareil électroniques selon la revendication 2, dans lesquels ladite base de circuit imprimé (21) a une extension principale dans une première direction (x) ; et dans lesquels lesdits éléments conducteurs (23a, 23b) desdits premier et second agencements de contacts (22a, 22b) sont distribués le long de ladite direction (x) d'extension principale, des éléments conducteurs (23a) du premier agencement de contacts (22a) alternant avec des éléments conducteurs (23b) du second agencement de contacts (22b) le long de ladite première direction (x).

4. Machinerie ou appareil électroniques selon la revendication 3, dans lesquels chacun desdits premier et second agencements de contacts (22a, 22b) comprend en outre une borne d'entrée (25a, 25b) respective, qui est connectée à la piste de connexion électrique (24a, 24b) respective et agencée au niveau d'une première partie bord de la base de circuit imprimé (21) ; et une borne de sortie (26a, 26b) respective, qui est connectée à la piste de connexion électrique (24a, 24b) respective et agencée au niveau d'une seconde partie bord de la base de circuit imprimé (21), qui est opposée longitudinalement à la première partie bord le long de ladite première direction (x).

5. Machinerie ou appareil électroniques selon la revendication 3 ou 4, dans lesquels lesdits éléments conducteurs (23a, 23b) desdits premier et second agencements de contacts (22a, 22b) ont une forme allongée le long d'une seconde direction (y), qui est orthogonale à ladite première direction (x), et sont agencés, comme un ensemble, conformément à un motif interdigité ; et dans lesquels les pistes de connexion électrique (24a, 24b) desdits premier et second agencements de contacts (22a, 22b) sont toutes deux fournies sur ladite face avant (21') et ont une extension longitudinale le long de ladite première direction (x), la piste de connexion électrique (24a) du premier agencement de contacts (22a) étant agencée sur un côté supérieur, et la piste de connexion électrique (24b) du second agencement de contacts (22b) étant agencée sur un côté inférieur, du motif interdigité des éléments conducteurs (23a, 23b) par rapport à ladite seconde direction (y).

6. Machinerie ou appareil électroniques selon la revendication 3 ou 4, dans lesquels ladite base de circuit imprimé (21) comprend en outre une face arrière (21") opposée à ladite face avant (21') ; et dans lesquels les éléments conducteurs (23a, 23b) desdits premier et second agencements de contacts (22a, 22b) sont alignés le long de ladite première direction (x) en deux rangées agencées sur un côté supérieur et sur un côté inférieur de la base de circuit imprimé (21) par rapport à ladite seconde direction (y), des éléments conducteurs (23a) du premier agencement de contacts (22a) alternant avec des éléments conducteurs (23b) du second agencement de contacts (22b) le long de chacune desdites rangées ; et dans lesquels la piste de connexion électrique (24a) connectant électriquement les éléments conducteurs (23a) du premier agencement de contacts (22a) les uns aux autres est fournie sur la face avant (21') de la base de circuit imprimé (21) et la piste de connexion électrique (24b) connectant électriquement les éléments conducteurs (23b) du second agencement de contacts (22b) les uns aux autres est fournie sur la face arrière (21") de la base de circuit imprimé (21).

7. Machinerie ou appareil électroniques selon l'une quelconque des revendications précédentes, dans lesquels ledit élément sensible (20) a une configuration modulaire et comprend une carte PCB (50) dans laquelle une pluralité de bases de circuit imprimé (21) sont fournies, qui sont alignées les unes sur les autres et couplées les unes aux autres dans une première direction (x) et/ou une seconde direction (y) ; dans lesquelles ladite carte PCB (50) a des régions d'affaiblissement structurel (52) au niveau des régions de couplage entre des bases de circuit imprimé (21) adjacentes.

8. Machinerie ou appareil électroniques selon l'une quelconque des revendications précédentes, comprenant en outre une structure de base (31) et une structure couvrante (32) couplée au-dessus de la structure de base (31), définissant à l'intérieur une chambre (33) creuse ayant une paroi de fond au niveau de ladite structure de base (31) et abritant ledit élément sensible (20) ; dans lesquels ladite base de circuit imprimé (21) est couplée sur ladite structure de base (31), au niveau de la paroi de fond de la chambre (33), à ladite face avant (21') en face de ladite chambre (33).

9. Machinerie ou appareil électroniques selon la revendication 8, dans lesquels ledit élément actionneur conducteur (35) est couplé à une paroi de dessus de la chambre (33), en face de la face avant (21') de ladite base de circuit imprimé (21), de laquelle il est normalement séparé par un intervalle de séparation.

10. Machinerie ou appareil électroniques selon l'une quelconque des revendications 1 à 8, comprenant en outre une membrane d'actionnement (40) couplée sur, et en contact avec, la face supérieure (21') de la base de circuit imprimé (21) ; ladite membrane d'actionnement (40) ayant : une partie centrale (40a) agencée au-dessus et en face du premier et du second agencement de contacts (22a, 22b) ; des parties parois de côtés (40b), qui sont agencées latéralement par rapport à la partie centrale (40a) et définissent un intervalle de séparation entre ladite partie centrale (40a) et ladite base de circuit imprimé (21) ; et des parties de couplage (40c), qui sont agencées latéralement par rapport aux parties parois de côtés (40b) et sont couplées sur, et en contact avec, la base de circuit imprimé (21).

11. Machinerie ou appareil électroniques selon la revendication 10, dans lesquels ladite partie centrale (40a) de la membrane d'actionnement (40) porte, dans une position en face desdits agencements de contacts (22a, 22b), une bande conductrice (42) ; et dans lesquels ladite bande conductrice forme ledit élément actionneur conducteur (35).

12. Machinerie ou appareil électroniques selon la revendication 10, dans lesquels ladite partie centrale (40a) de la membrane d'actionnement (40) est faite d'un matériau conducteur et forme ledit élément actionneur conducteur (35).

13. Machinerie ou appareil électroniques selon l'une quelconque des revendications 1 à 8, comprenant une structure déformable (60) définissant à l'intérieur une cavité (62) dans laquelle ledit élément sensible (20) est abrité ; la base de circuit imprimé (21) de l'élément sensible (20) étant couplée à une paroi interne de la structure déformable (60) dans ladite cavité (62), à une distance de séparation de ladite paroi interne, dans un état au repos ; dans lesquels la structure déformable (60) est complètement ou partiellement couverte sur la paroi interne d'un matériau conducteur, ou, en variante, est faite elle-même d'un matériau conducteur, et est configurée pour entrer en contact avec ladite base de circuit imprimé (21) par le biais d'une compression due à une pression de contact (P).

14. Machinerie ou appareil électroniques selon l'une quelconque des revendications précédentes, dans lesquels lesdits premier et second agencements de contacts (22a, 22b) sont faits d'un matériau conducteur revêtu de graphite, d'or ou d'un autre matériau conducteur qui ne subit pas de changements de conductivité de surface au fil du temps.

15. Machinerie ou appareil électroniques selon l'une quelconque des revendications précédentes, dans lesquels au moins une piste électrique (27) est en outre fournie sur ladite base de circuit imprimé (21), qui est conçue pour former un seul et même circuit électrique avec ledit premier ou ledit second agencement de contacts (22a, 22b).

16. Machinerie ou appareil électroniques selon l'une quelconque des revendications précédentes, pour traiter des pièces faites de bois ou autre, comprenant :
une base allongée (56) conçue pour supporter lesdites pièces faites de bois ou autre ; et un pont roulant (54), qui s'étend transversalement au-dessus de, et mobile par rapport à, ladite base allongée (56) et porte une tête de traitement pour traiter lesdites pièces faites de bois ou autre ; dans lesquels ledit au moins un dispositif de sécurité électrique (30) est couplé audit pont roulant (54).

17. Machinerie ou appareil électroniques selon l'une quelconque des revendications précédentes, dans lesquels ledit dispositif de sécurité électrique (30) est un dispositif pare-chocs ou un dispositif à bords sensibles.
